# EUROPEAN PATENT SPECIFICATION

(11) **EP 2 812 237 B1**
(45) Date of publication and mention of the grant of the patent: **16.03.2016**
(21) Application number: 13703903.8
(22) Date of filing: 23.01.2013
(51) Int. Cl.: B63B 19/26, B63B 13/00, E02F 7/00, B63B 13/02, E02F 7/10, B63B 35/30

(54) **OVERFLOW DEVICE FOR A VESSEL**
ÜBERLAUFGERÄT FÜR EIN SCHIFF
DISPOSITIF DE TROP-PLEIN POUR UN NAVIRE

(30) Priority: 10.02.2012 NL 2008273
(43) Date of publication of application: 17.12.2014
(73) Proprietor: IHC Holland IE B.V., 3361 EP Sliedrecht (NL)
(72) Inventor: Kik, André, NL-3343 BR Hendrik-Ido-Ambacht (NL); de Jager, Arie, NL-3361 BR Sliedrecht (NL); van Opstal, Timothy Alexander, NL-3061 VZ Rotterdam (NL); van Spaendonk, Bram Adrianus Waltherus, NL-4841 LM Prinsenbeek (NL)
(74) Representative: Nederlandsch Octrooibureau
(86) International application number: PCT/NL2013/050031
(87) International publication number: WO 2013/119107

(56) References cited:
- EP-A1- 0 000 075
- EP-A1- 2 020 377
- WO-A1-2010/122093
- WO-A1-2011/118228
- GB-A- 836 101
- US-A- 5 950 732
- US-B1- 7 699 013

## Description

### Background

The present invention relates to a passive overflow device for draining away head water standing above settled sand in a loading space of a hopper.

The present invention further relates to a vessel comprising such a passive overflow device.

An overflow device is known from EP0000075 which relates to a dredging vessel comprising a loading space for receiving spoil, for example sand, and at least two effluent devices for conducting away the head water standing above the settled sand, said effluent devices comprising a conduit having a level-adjustable inlet and an outlet opening out in the outboard water, the inlet of the conduit being adjustable between an inactive position and an active siphon position, whilst the conduits of at least two effluent devices are coupled on board with a coupling conduit opening out in a common outlet conduit.

### Summary of the invention

The invention aims to provide a passive overflow device for draining away head water standing above settled sand in a loading space of a hopper, wherein environmental impact of dredging is reduces and risk of damage to the vessel or overflow device is minimized.

Another object of the invention is to improve an known overflow device.

Yet another object of the invention is to provide an alternative overflow device.

According to a first aspect of the invention this is realized with a passive overflow device for draining away head water standing above settled sand in a loading space of a hopper, wherein the passive overflow device extends along a longitudinal axis and comprises;
- an inlet for taking in the head water,
- an outlet section having an outlet for opening out in the outboard water and which outlet is level adjustable into an active position wherein in use, the head water is delivered at considerable depth below the water surface,
- a conduit which extends along the longitudinal axis of the passive overflow device and which conduit fluidly couples the inlet and the outlet,
- a supporting structure for coupling the overflow device with the loading space of a hopper,
wherein, the outlet section comprises an flexible portion proximate the outlet for preventing mechanical overload to the supporting structure when the outlet, in use, in its active position accidently abuts the sea bottom.

The passive overflow according to the invention is able to deliver the head water ,and e.g. sand in the head water, close to the sea bottom such that influence to sea life is minimal because sunlight is still able to enter the seawater. The outlet section comprising an flexible portion proximate the outlet prevents possible serious damage to the overflow device and the vessel comprising such an overflow device. In addition, the flexible portion allows outflow of the head water even closer to the sea bottom.

Passive overflow device means that the device does not comprise active means like a pump to set a flow of head water in motion.

The head water is, in use, delivered at considerable depth below the water surface, wherein considerable depth below the water surface means on the one hand so close to the sea bottom that there is a significant positive effect to the environment, and on the other hand the outlet is, in its active position in use, vertically spaced from the propelling screw of a vessel comprising the passive overflow. The head water being delivered close to the sea bottom has a significant positive effect to the environment because any pollution in the head water is not unnecessarily spread in the sea water. The outlet is such far below the water surface that delivered head water does not take away sunlight for organisms in the sea water. In addition, the outlet being spaced from the propelling screw has a positive effect to environment because the head water is kept away from the propelling screw of the vessel which also prevents spread of head water by the screw. The active position of the outlet section is such that the outlet or outlet section normally does not touch the sea bottom. In its active position, the outlet will in practice take a position between 1 and 10 meter below the keel of the vessel, for example about 4, 5 or 8 meter below the keel of the vessel.

In an embodiment of the passive overflow device, the flexible portion of the outlet section comprises means for reinforcing the flexible portion and maintaining the outlet. The means for reinforcing the flexible portion ensure that the overflow function is guaranteed while still preventing possible serious damage to the overflow device and the vessel comprising such an overflow device. Maintaining the overflow function is crucial in costly dredging operations.

In an embodiment of the passive overflow device, the means for reinforcing the flexible portion comprises a ring portion. The ring portion enables that the overflow function is guaranteed, while allowing lateral deformation of the flexible portion. It will be clear that the cross section of the ring can have any suitable shape, like e.g. a circle, square, oval.

In an embodiment of the passive overflow device, the ring portion comprises steel. It will be clear that where steel can be used, any suitable material for reinforcing the flexible portion is conceivable.

In an embodiment of the passive overflow device, the ring portion extends around the longitudinal axis of the passive overflow device. The ring portion extending around the longitudinal axis even more ensures that the overflow function is guaranteed, while allowing lateral deformation of the flexible portion.

In an embodiment of the passive overflow device, the means for reinforcing the flexible portion comprise a closed ring.

In an embodiment of the passive overflow device, the means for reinforcing the flexible portion comprises a number of steel closed rings, specifically a number of coaxial steel closed rings.

In an embodiment of the passive overflow device, the outlet section comprises a tear of means for allowing at least a part of the outlet section to be torn off in case of excessive mechanical load to the outlet when, in use in its active position, the outlet accidently abuts the sea bottom. The tear of means even more prevents possible serious damage to the overflow device and the vessel comprising such an overflow device and thus promotes safe operations at sea.

In an embodiment of the passive overflow device, the tear of means comprise a region of the flexible portion, which region has a reduced tear strength. This provides an integrated tear of means to the passive overflow device.

In an embodiment of the passive overflow device, the inlet and the outlet are directly fluid coupled.

In an embodiment of the passive overflow device, both the inlet and outlet are centred at the longitudinal axis of the passive overflow device. This enables a simple and direct coupling with a loading space of a hopper such that head water flows directly downwards into the sea.

In an embodiment of the passive overflow device, the conduit comprise a number of conduit sections which are telescopically arranged for level adjusting-the outlet into its active position.

In an embodiment of the passive overflow device, in a retracted inactive position the number of conduit sections overlap.

The invention further relates to a vessel comprising a passive overflow device according to the invention, wherein the passive overflow device is coupled with a loading space of the vessel for draining away head water standing above settled sand in the loading space. The passive overflow device is directly coupled with the loading space without any intermediate conduits or pumping means. The passive overflow is arranged with respect to the vessel in such a manner that the longitudinal axis of the passive overflow extends in the loading space of the vessel.

In an embodiment of the vessel, the passive overflow device is vertically arranged.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to an preferred embodiment shown in the drawing wherein shown in:
Fig. 1 in perspective view a passive overflow device according to the invention;
fig. 2 in perspective, partly cut away, view an outlet section of the passive overflow device of fig. 1; and
fig 3, a schematic cross-sectional side view of a passive overflow device according to the invention.

### Detailed description of embodiments

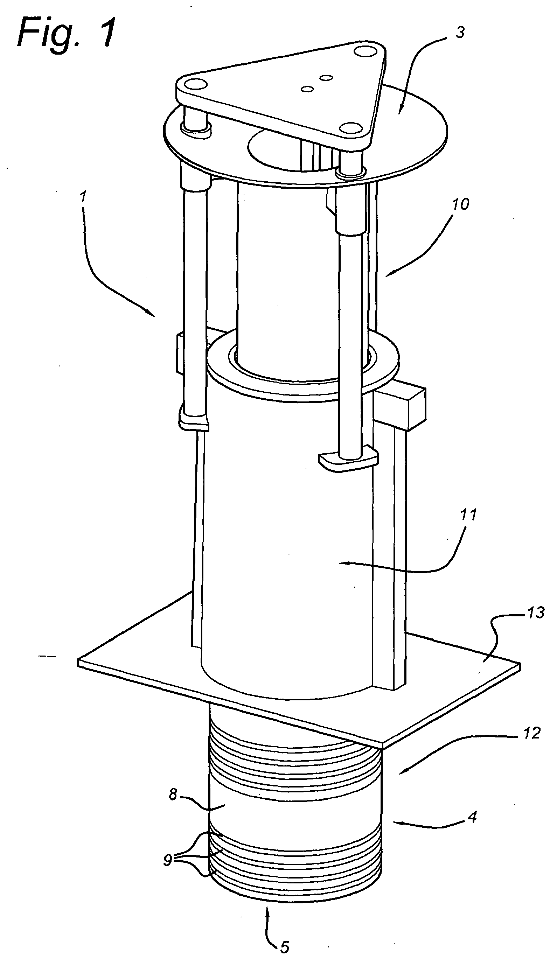

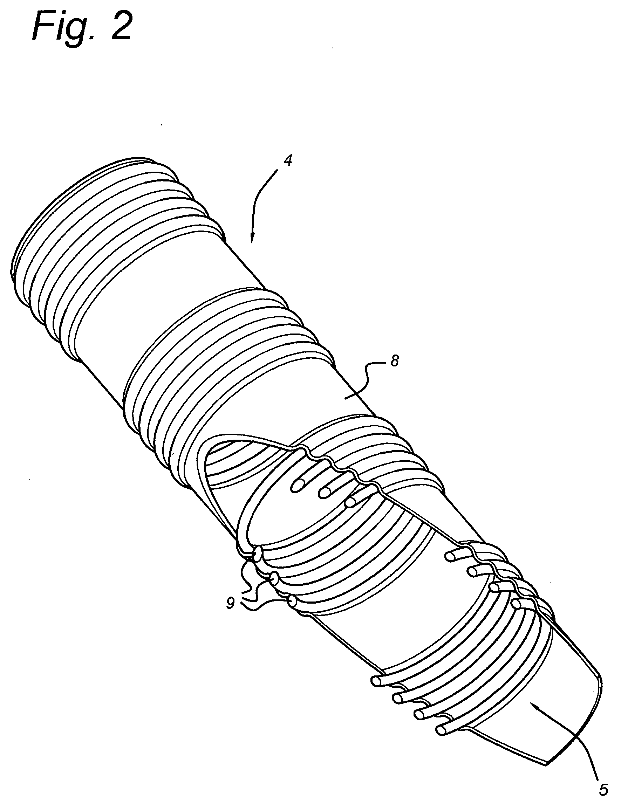

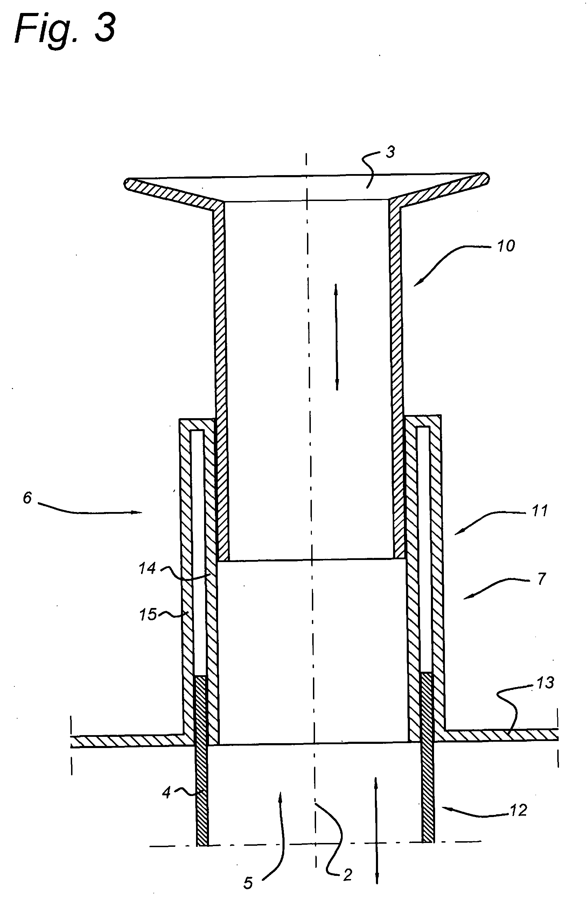

In the figures, fig. 1 depicts in perspective view a passive overflow device 1 according to the invention. Fig. 2 shows in perspective view an outlet section 4 of the passive overflow device 1. Fig 3 is a schematic cross-sectional side view of a passive overflow device 1 according to the inventions. The invention will now be described referring to all figures 1-3.

A passive overflow device 1 is shown which device is suitable for draining away head water standing above settled sand in a loading space of a hopper. The passive overflow device 1 extends along a longitudinal axis 2 which is here in a vertical position. The passive overflow device 1 has an inlet 3 for taking in the head water, which inlet 3 here has a dished form. The passive overflow device 1 has an outlet section 4. The outlet section 4 comprises an outlet 5 for opening out in the outboard water. The outlet section 4 including the outlet 5 is level adjustable into an active position. In the active position of the outlet 5, the head water is delivered proximate the sea bottom, during use of the passive overflow device 1. It will be clear that proximate the sea bottom means so proximate that a positive effect to environment is present. For example the outlet is such far below the water surface that delivered head water does not take away sunlight for organisms in the sea water. In addition, the outlet 5 is such far below the water surface that in use the head water is kept away from the propelling screw of the vessel which also prevents spread of head water by the screw which would cause been taken away. The passive overflow device 1 has a conduit 6 which conduit fluidly couples the inlet 3 and the outlet 5 of the outlet section 4. The conduit 6 extends along the longitudinal axis 2 of the passive overflow device 1. The inlet 3 and the outlet 5 are directly fluid coupled via the conduit 6. Directly means that no intervening fluid driving device like a pump is present. Here, both the inlet 3 and outlet 5 are centred at the longitudinal axis 2 of the passive overflow device 1.

The passive overflow device 1 has a supporting structure 7 for coupling the overflow device with the loading space of a hopper. Here, the supporting structure 7 couples the passive overflow device 1 with a loading space plate member 13. The supporting structure 7 supports the passive overflow device 1 in a substantially vertical position.

The outlet section 4 of the passive overflow device 1 comprises an flexible portion 8 proximate the outlet 5. The flexible portion 8 is suitable for preventing mechanical overload to the supporting structure 7. This may happen for instance when the outlet 5, in use, in its active position accidently abuts the sea bottom or another firm obstacle. The flexible portion 8 of the outlet section 4 comprises a number of closed steel rings 9 for reinforcing the flexible portion 8 and maintaining the outlet 5 such that the flow of head water is not interrupted. The steel rings 9 each extend around the longitudinal axis 2 of the passive overflow device 1. The steel rings 9 are embedded in the flexible portion 8. The number of steel rings 9 are co-axial. The number of steel rings 9 are centred on the longitudinal axis 2 of the passive overflow device 1. The flexible portion 8 may comprise, specifically be made of, any suitable type of rubber. Where the flexible portion 8 comprises closed steel rings 9, it will be clear that it is conceivable that instead or additionally, the flexible portion 8 comprises ring portions. Where, the rings 9 are made of steel, it will be clear that any other suitable material for reinforcing the flexible portion 8 is conceivable.

The outlet section 4 of the passive overflow device 1 comprises a tear of means (not shown) for allowing at least a part of the outlet section 4 to be torn off in case of excessive mechanical load to the outlet section 4 or the outlet 5 thereof when, in use in its active position, the outlet 5 accidently abuts the sea bottom. The tear of means comprise a region of the flexible portion 8, which region has a reduced tear strength. This way, tear of means are integrated in the flexible portion 8.

Here, the conduit 6 comprises three conduit sections 10, 11, 12, an upper-, intermediate- and lower-conduit section. The lower conduit section 12 and the intermediate conduit section 11 are telescopically arranged for level adjusting the outlet section 4 including the outlet 5 into its active position proximate the sea bottom.
The upper conduit section 10 and the intermediate conduit section 11 are telescopically arranged for level adjusting the inlet 3 such that head water is able to enter the inlet. In telescoping along the longitudinal axis 2, the inlet 3 is guided by means of three pillars which are in sliding contact with the dish shaped inlet 3. The conduit sections 10, 11, 12 are mutually driven in a manner known per se.

The intermediate conduit section 11 is double walled 14, 15 such that both the upper conduit section 10 and the lower conduit section 12 can be accommodated within the intermediate conduit section 11. The upper conduit section 10 bears against the intermediate conduit section inner wall 14. The lower conduit section 12 bears against the intermediate conduit section outer wall 15. In a retracted inactive position the number of conduit sections 10, 11, 12 overlap such that a compact passive overflow device 1 is obtained.

In use, the passive overflow device 1 is coupled with a loading space of a vessel for draining away head water standing above settled sand in the loading space. The passive overflow device 1 is coupled with the vessel such that it is part of the vessel. The inlet 3 is vertically level adjusted such that head water may enter the inlet. The outlet section 4 including the outlet 5 is vertically level adjusted into its active position. The head water may now flow from the loading space to the outboard sea in a passive way.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Passive overflow device (1) for draining away head water standing above settled sand in a loading space of a hopper, wherein the passive overflow device extends along a longitudinal axis (2) and comprises;
- an inlet (3) for taking in the head water,
- an outlet section (4) having an outlet (5) for opening out in the outboard water and which outlet is level adjustable into an active position wherein in use, the head water is delivered at considerable depth below the water surface,
- a conduit (6) which extends along the longitudinal axis of the passive overflow device and which conduit fluidly couples the inlet and the outlet,
- a supporting structure (7) for coupling the overflow device with the loading space of a hopper, **characterized in that**,
the outlet section comprises an flexible portion (8) proximate the outlet for preventing mechanical overload to the supporting structure when the outlet, in use, in its active position accidently abuts the sea bottom.

2. Passive overflow device according to claim 1, wherein the flexible portion of the outlet section comprises means (9) for reinforcing the flexible portion and maintaining the outlet.

3. Passive overflow device according to claim 2, wherein the means for reinforcing the flexible portion comprises a ring portion (9).

4. Passive overflow device according to claim 2, wherein the ring portions comprises steel.

5. Passive overflow device according to claim 2, wherein the ring portions extends around the longitudinal axis of the passive overflow device.

6. Passive overflow device according to a preceding claim 2-5, wherein the means for reinforcing the flexible portion comprise a closed ring (9).

7. Passive overflow device according to claim 6, wherein the means for reinforcing the flexible portion comprises a number of steel closed rings (9).

8. Passive overflow device according to a preceding claim, wherein the outlet section comprises a tear of means for allowing at least a part of the outlet section to be torn off in case of excessive mechanical load to the outlet when, in use in its active position, the outlet accidently abuts the sea bottom.

9. Passive overflow device according to claim 8, wherein the tear of means comprise a region of the flexible portion, which region has a reduced tear strength.

10. Passive overflow device according to a preceding claim, wherein the inlet and the outlet are directly fluid coupled.

11. Passive overflow device according to a preceding claim, where both the inlet and outlet are centred at the longitudinal axis of the passive overflow device.

12. Passive overflow device according to a preceding claim, wherein the conduit comprise a number of conduit sections (10, 11, 12) which are telescopically arranged for level adjusting the outlet into its active position.

13. Passive overflow device according to claim 12, wherein in a retracted inactive position the number of conduit sections overlap.

14. Vessel comprising a passive overflow device according to a preceding claim, wherein the passive overflow device is coupled with a loading space of the vessel for draining away head water standing above settled sand in the loading space.

15. Vessel according to claim 14, wherein the passive overflow device is vertically arranged.

## Patentansprüche

1. Passive Überlaufvorrichtung (1) zum Ableiten von Oberwasser, das über abgesetztem Sand im Laderaum einer Ladewanne steht, wobei die passive Überlaufvorrichtung sich entlang einer Längsachse (2) erstreckt und aufweist:
- einen Einlass (3) zum Aufnehmen des Oberwassers,
- einen Auslassabschnitt (4) mit einem Auslass (5), um in das Außenbordwasser zu münden, und wobei der Auslass in eine aktive Position höheneinstellbar ist, wobei das Oberwasser im Betrieb bei einer erheblichen Tiefe unterhalb der Wasseroberfläche freigesetzt wird,
- eine Leitung (6), die entlang der Längsachse der passiven Überlaufvorrichtung verläuft und die den Einlass und den Auslass in Durchflussverbindung miteinander verbindet,
- eine Tragstruktur (7) zum Verbinden der Überlaufvorrichtung mit dem Laderaum einer Ladewanne,
**dadurch gekennzeichnet, dass** der Auslassabschnitt nahe des Auslasses einen flexiblen Bereich (8) aufweist, um eine mechanische Überlastung der Tragstruktur zu vermeiden, wenn der Auslass im Betrieb in seiner aktiven Position unbeabsichtigt den Gewässerboden berührt.

2. Passive Überlaufvorrichtung nach Anspruch 1, wobei der flexible Bereich des Auslassabschnitts Einrichtungen (9) zum Verstärken des flexiblen Bereichs und zum Aufrechterhalten des Auslasses aufweist.

3. Passive Überlaufvorrichtung nach Anspruch 2, wobei die Einrichtungen zum Verstärken des flexiblen Bereichs einen Ringteil (9) aufweist.

4. Passive Überlaufvorrichtung nach Anspruch 2, wobei die Ringteile Stahl aufweisen.

5. Passive Überlaufvorrichtung nach Anspruch 2, wobei die Ringteile um die Längsachse der passiven Überlaufvorrichtung herum verlaufen.

6. Passive Überlaufvorrichtung nach einem der vorhergehenden Ansprüche 2 - 5, wobei die Einrichtungen zum Verstärken des flexiblen Bereichs einen geschlossenen Ring (9) aufweisen.

7. Passive Überlaufvorrichtung nach Anspruch 6, wobei die Einrichtungen zum Verstärken des flexiblen Bereichs eine Anzahl von geschlossenen Stahlringen (9) aufweisen.

8. Passive Überlaufvorrichtung nach einem der vorhergehenden Ansprüche, wobei der Auslassabschnitt eine Abreißeinrichtung aufweist, um es zu ermöglichen, dass wenigstens ein Teil des Auslassabschnitts im Falle einer übermäßigen mechanischen Last auf den Auslass, wenn der Auslass im Betrieb in seiner aktiven Position unbeabsichtigt den Gewässerboden berührt, abgerissen wird.

9. Passive Überlaufvorrichtung nach Anspruch 8, wobei die Abreißeinrichtung eine Region des flexiblen Bereichs umfasst, die eine reduzierte Reißfestigkeit hat.

10. Passive Überlaufvorrichtung nach einem der vorhergehenden Ansprüche, wobei der Einlass und der Auslass direkt in Fluidverbindung miteinander stehen.

11. Passive Überlaufvorrichtung nach einem der vorhergehenden Ansprüche, wobei der Einlass und der Auslass auf der Längsachse der passiven Überlaufvorrichtung zentriert sind.

12. Passive Überlaufvorrichtung nach einem der vorhergehenden Ansprüche, wobei die Leitung eine Anzahl von Leitungsabschnitten (10, 11, 12) umfasst, die teleskopartig angeordnet sind, um den Auslass in seine aktive Position in der Höhe einzustellen.

13. Passive Überlaufvorrichtung nach Anspruch 12, wobei die Anzahl von Leitungsabschnitten in einer zurückgezogenen inaktiven Position miteinander überlappen.

14. Schiff mit einer passiven Überlaufvorrichtung nach einem der vorhergehenden Ansprüche, wobei die passive Überlaufvorrichtung mit einem Laderaum des Schiffs verbunden ist, um Oberwasser abzuleiten, das über abgesetztem Sand in dem Laderaum steht.

15. Schiff nach Anspruch 14, wobei die passive Überlaufvorrichtung vertikal aufgebaut ist.

## Revendications

1. Dispositif de trop-plein passif (1) servant à évacuer l'eau de tête qui se trouve au-dessus du sable tassé dans un espace de chargement d'une trémie, le dispositif de trop-plein passif s'étendant le long d'un axe longitudinal (2) et comprenant ;
- une entrée (3) servant à prélever l'eau de tête,
- une section de sortie (4) qui comporte une sortie (5) s'ouvrant dans l'eau située hors du bord et qui est réglable en termes de niveau dans une position active, l'eau de tête étant délivrée en cours d'utilisation à une profondeur considérable au-dessous de la surface de l'eau,
- un conduit (6) qui s'étend le long de l'axe longitudinal de du dispositif de trop-plein passif et qui met l'entrée et la sortie en communication fluidique,
- une structure de support (7) servant à accoupler le dispositif de trop-plein avec l'espace de chargement d'une trémie,
**caractérisé en ce que** la section de sortie comporte une partie flexible (8) à proximité de la sortie pour empêcher de surcharger mécaniquement la structure de support lorsque la sortie vient buter accidentellement, en utilisation dans sa position active, le fond de la mer.

2. Dispositif de trop-plein passif selon la revendication 1, dans lequel la partie flexible de la section de sortie comprend des moyens (9) pour renforcer la partie flexible et maintenir la sortie.

3. Dispositif de trop-plein passif selon la revendication 2, dans lequel les moyens de renforcement de la partie flexible comportent une partie annulaire (9).

4. Dispositif de trop-plein passif selon la revendication 2, dans lequel la partie annulaire contient de l'acier.

5. Dispositif de trop-plein passif selon la revendication 2, dans lequel la partie annulaire s'étend autour de l'axe longitudinal du dispositif de trop-plein passif.

6. Dispositif de trop-plein passif selon l'une des revendications précédentes 2 à 5, dans lequel les moyens de renforcement de la partie flexible comprennent un anneau fermé (9).

7. Dispositif de trop-plein passif selon la revendication 6, dans lequel les moyens de renforcement de la partie flexible comprennent un certain nombre d'anneaux fermés (9) en acier.

8. Dispositif de trop-plein passif selon l'une des revendications précédentes, dans lequel la section de sortie comprend un moyen de déchirement permettant à au moins une partie de la section de sortie de se déchirer en cas de surcharge mécanique au niveau de la sortie lorsque la sortie vient en butée, en utilisation dans sa position active, accidentellement contre le fond de la mer.

9. Dispositif de trop-plein passif selon la revendication 8, dans lequel les moyens de déchirement comprennent une région de la partie flexible qui présente une résistance réduite au déchirement.

10. Dispositif de trop-plein passif selon une revendication précédente, dans lequel l'entrée et la sortie sont accouplés pour être directement en communication fluidique.

11. Dispositif de trop-plein passif selon l'une des revendications précédentes, dans lequel l'entrée et la sortie sont toutes les deux centrées sur l'axe longitudinal du dispositif de trop-plein passif.

12. Dispositif de trop-plein passif selon l'une des revendications précédentes, dans lequel le conduit comprend un certain nombre de sections de conduit (10, 11, 12) qui sont disposées de manière télescopique pour régler le niveau de la sortie dans sa position active.

13. Dispositif de trop-plein passif selon la revendication 12, dans lequel, dans une position inactive rétractée, le nombre de sections de conduit se chevauchent.

14. Navire comprenant un dispositif de trop-plein passif selon l'une des revendications précédentes, dans lequel le dispositif de trop-plein passif est accouplé à un espace de chargement du navire servant à drainer l'eau de tête se trouvant au-dessus du sable tassé dans l'espace de chargement.

15. Navire selon la revendication 14, dans lequel le dispositif de trop-plein passif est disposé verticalement.
